# EUROPEAN PATENT SPECIFICATION

(11) **EP 3 578 802 B1**
(45) Date of publication and mention of the grant of the patent: **04.08.2021**
(21) Application number: 18747466.3
(22) Date of filing: 17.01.2018
(51) Int. Cl.: F02M 59/46, B23K 26/21, B23K 26/28, F02M 59/48

(54) **HIGH-PRESSURE FUEL SUPPLY PUMP**
HOCHDRUCKBRENNSTOFFFÖRDERPUMPE
POMPE D'ALIMENTATION EN CARBURANT HAUTE-PRESSION

(30) Priority: 31.01.2017 JP 2017014970
(43) Date of publication of application: 11.12.2019
(73) Proprietor: Hitachi Automotive Systems, Ltd., Hitachinaka-shi, Ibaraki 312-8503 (JP)
(72) Inventor: HASE, Satoshi, Hitachinaka-shi Ibaraki 312-8503 (JP); NAKATANI, Shinya, Hitachinaka-shi Ibaraki 312-8503 (JP); INADA, Rikiya, Hitachinaka-shi Ibaraki 312-8503 (JP); YAGAI, Masamichi, Hitachinaka-shi Ibaraki 312-8503 (JP)
(74) Representative: Strehl Schübel-Hopf & Partner
(86) International application number: PCT/JP2018/001137
(87) International publication number: WO 2018/142930

(56) References cited:
- WO-A1-2015/163242
- WO-A1-2016/041973
- JP-A- 2002 004 979
- JP-A- 2016 151 185
- JP-A- 2017 008 925
- US-A1- 2009 110 575
- US-A1- 2012 247 591

## Description

### Technical Field

The present invention relates to a high pressure fuel supply pump for pumping fuel to a fuel injection valve of an internal combustion engine.

### Background Art

As prior art corresponding to a welding structure of the present invention, there is a structure disclosed in PTL 1. PTL 1 discloses that "welding is performed by butting a joining end surface 50 of a cup member 12a and a joining end surface 51 of a shaft member 13a and irradiating the abutting portion with a high energy density beam radially from the outside of the cup member 12a" (see paragraph 0041).

### Citation List

### Patent Literature

PTL 1: JP 2016-002581 A

**Further,** US 2012/0247591 A1 **discloses a high pressure fuel supply pump from which the first part of claim 1 starts out.**

### Summary of Invention

### Technical Problem

In FIG. 2 of PTL 1, joining is performed by irradiating the abutting portion between the cup member and the shaft member with a high energy density beam such as laser welding or electron beam welding radially from the outside. However, due to product structure constraints, joining is difficult if the beam and the product interfere with each other. In that case, it is necessary to change the product structure or adjust the beam irradiation angle.

In the high pressure fuel supply pump, when irradiating is attempted with the high energy density beam radially from the outside due to the product structure constraints, the product and the high energy density beam interfere with each other to make joining difficult. In that case, it is necessary to adjust the irradiation angle of the laser. However, due to the characteristics of laser welding, the irradiation angle of the laser with respect to the irradiation surface of the laser is limited.

Then, an object of the present invention is to provide a high pressure fuel supply pump in which a functional component can be fixed by welding, while the freedom degree of arrangement of the functional component is improved.

### Solution to Problem

The above object is solved by a high pressure fuel supply pump as defined by the appended claims.

### Advantageous Effects of Invention

According to the present invention, a high pressure fuel supply pump can be provided, in which a functional component can be fixed by welding, while the freedom degree of arrangement of the functional component is improved. Other configurations, operations and effects of the present invention will be described in detail in the following embodiments.

### Brief Description of Drawings

[FIG. 1] FIG. 1 is a longitudinal sectional view of a high pressure fuel supply pump according to a first embodiment of the present invention.
[FIG. 2] FIG. 2 is a horizontal sectional view of the high pressure fuel supply pump according to the first embodiment of the present invention as viewed from above.
[FIG. 3] FIG. 3 is a longitudinal sectional view of the high pressure fuel supply pump according to the first embodiment of the present invention as viewed from a different direction from that of FIG. 1.
[FIG. 4] FIG. 4 shows a welding structure of a discharge joint of the high pressure fuel supply pump according to the first embodiment of the present invention.
[FIG. 5] FIG. 5 shows the welding structure of the discharge joint of the high pressure fuel supply pump according to the first embodiment of the present invention.
[FIG. 6] FIG. 6 shows a welding structure of a discharge plug of the high pressure fuel supply pump according to the first embodiment of the present invention.
[FIG. 7] FIG. 7 is an enlarged vertical sectional view of an electromagnetic suction valve mechanism of the high pressure fuel supply pump according to the first embodiment of the present invention, showing a state in which an electromagnetic suction valve is in an open state.
[FIG. 8] FIG. 8 is a configuration diagram of an engine system to which the high pressure fuel supply pump according to the first embodiment of the present invention is applied.
[FIG. 9] FIG. 9 is a longitudinal sectional view of the high pressure fuel supply pump in which a suction joint is attached to a side surface of a pump body according to the first embodiment of the present invention.

### Description of Embodiments

Hereinafter, embodiments of the present invention will be described in detail with reference to the drawings.

### First Embodiment

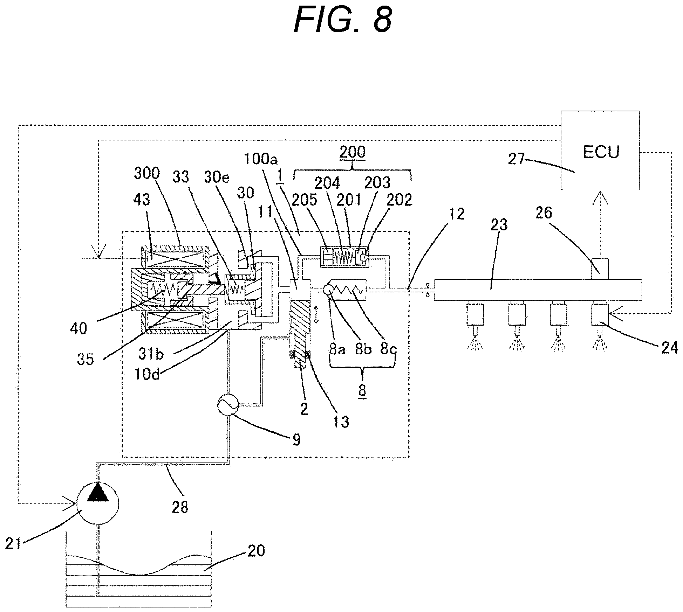

FIG. 8 is a configuration diagram of an engine system to which a high pressure fuel supply pump (hereinafter, referred to as a high pressure pump) according to a first embodiment of the present invention is applied. The portion enclosed by a broken line shows a pump body 1 of the high pressure pump, and the mechanisms and components shown in the broken line indicates that they are integrally incorporated into the pump body 1 of the high pressure pump.

The fuel in a fuel tank 20 is pumped up by a feed pump 21 on the basis of a signal from an engine control unit 27 (hereinafter, referred to as an ECU). The fuel is pressurized to an appropriate feed pressure and sent through a suction piping 28 to a low pressure fuel suction port 10a of the high pressure pump.

The fuel that has passed through a suction joint 51 from the low pressure fuel suction port 10a reaches a suction port 31b of an electromagnetic suction valve mechanism 300 that constitutes a capacity variable mechanism through a pressure pulsation reduction mechanism 9 and a suction passage 10d.

The fuel flowing into the electromagnetic suction valve mechanism 300 passes through a suction valve 30 and flows into a pressure chamber 11. A cam mechanism 93 of an engine gives power to the plunger 2 to reciprocate. Due to the reciprocating motion of a plunger 2, fuel is sucked from the suction valve 30 in the descending stroke of the plunger 2, and the fuel is pressurized in the ascending stroke. The fuel is pumped through a discharge valve mechanism 8 to a common rail 23 on which a pressure sensor 26 is mounted. An injector 24 injects fuel to the engine on the basis of the signal from the ECU 27.

The high pressure pump discharges the fuel flow rate of the desired supply fuel according to a signal from the ECU 27 to the electromagnetic suction valve mechanism 300. Thus, the necessary amount of fuel introduced to the suction joint 51 is pressurized to a high pressure by the reciprocation of the plunger 2 in the pressure chamber 11 of the pump body 1 and is pumped from a fuel discharge port 12c to the common rail 23.

An injector 24 for direct injection (so-called direct injector) and a pressure sensor 26 are mounted on the common rail 23. The direct injector 24 is mounted in accordance with the number of cylinders of the internal combustion engine, opens and closes the valve in accordance with the control signal of the ECU 27, and injects the fuel into the cylinder.

When an abnormal high pressure occurs in the common rail 23 or the like due to a failure of the direct injector 24 or the like, if the differential pressure between the fuel discharge port 12c and the pressure chamber 11 becomes equal to or more than the valve opening pressure of a relief valve mechanism 200, a relief valve 202 opens, the fuel of which pressure has become abnormally high passes through the inside of the relief valve mechanism and is returned from a relief passage 200a to the pressure chamber 11, and a high pressure portion piping such as the common rail 23 is protected.

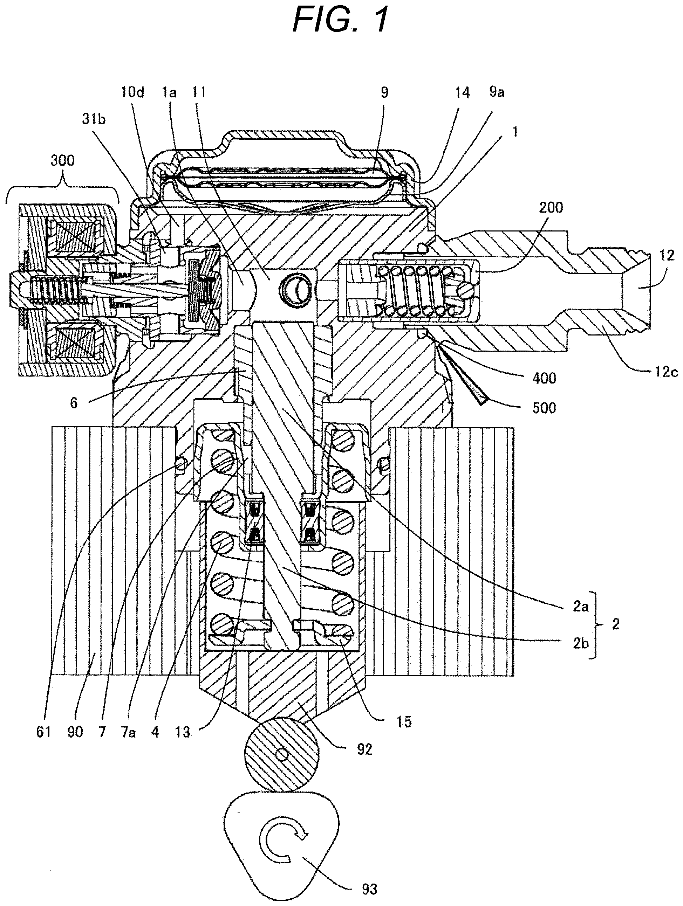

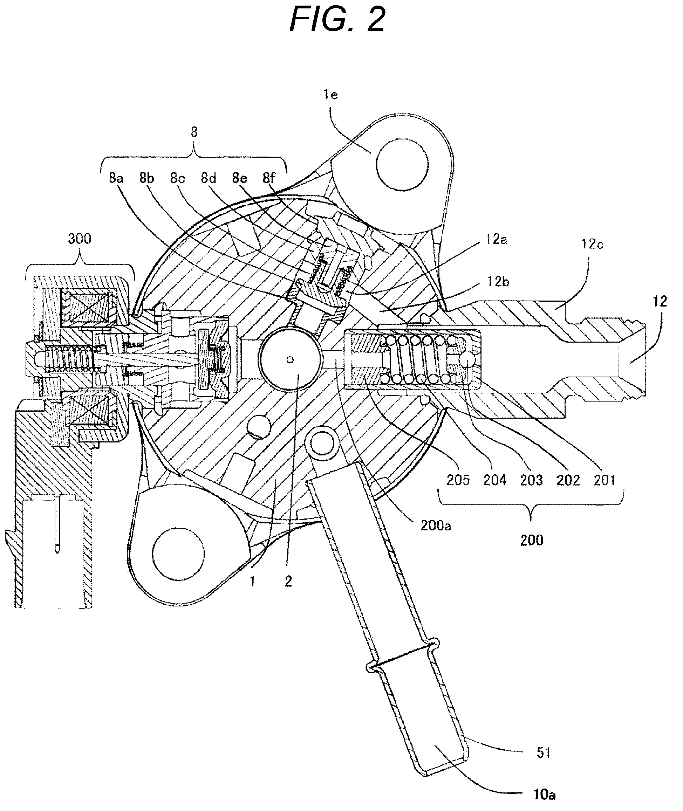

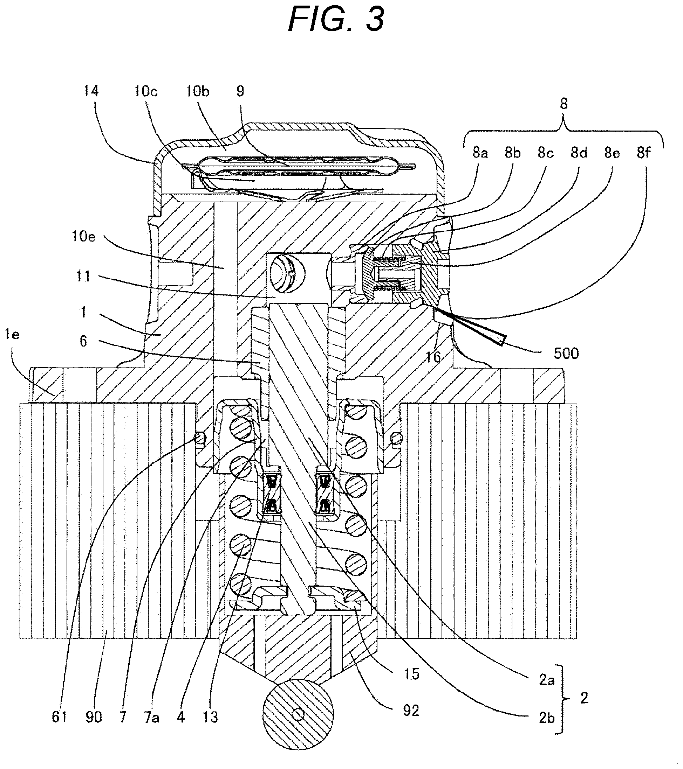

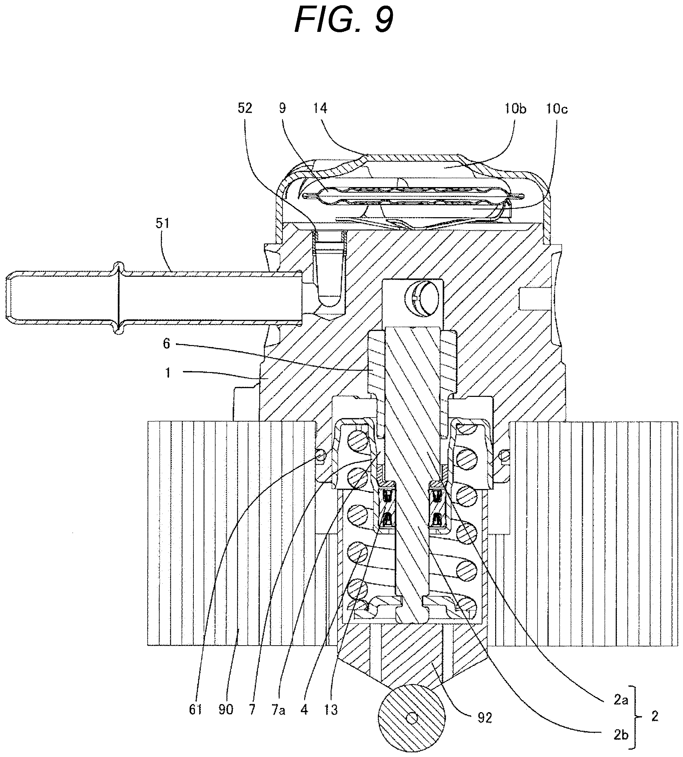

The present embodiment is a high pressure pump applied to a so-called direct injection engine system in which the injector 24 injects fuel directly into the cylinder of the engine. FIG. 1 is a longitudinal sectional view of a high pressure pump according to the present embodiment, and FIG. 2 is a horizontal sectional view of the high pressure pump as viewed from above. FIG. 3 is a longitudinal sectional view of the high pressure pump as viewed from a different direction from that of FIG. 1. FIG. 9 is a longitudinal sectional view of the high pressure pump in which the suction joint 51 is attached to a side surface of the pump body 1.

Note that, although the suction joint 51 is provided on the side surface of the body in FIG. 2, the present invention is not limited to this, and can be applied to a high pressure pump having the suction joint 51 provided on the upper surface of a damper cover 14. The high pressure pump of the present embodiment will be described with reference to FIGS. 1, 2, and 3.

The fuel flowing from the low pressure fuel suction port 10a of the suction joint 51 (not shown in FIG. 1) flows through the low pressure flow path formed inside the pump body 1 to a damper chamber formed in a damper upper portion 10b and a damper lower portion 10c. The damper chamber is formed by being covered by the damper cover 14 attached to the pump body 1. The fuel whose pressure pulsation is reduced by the pressure pulsation reduction mechanism 9 in the damper chamber reaches the suction port 31b of the electromagnetic suction valve 300 via the low pressure fuel passage 10d.

As shown in FIGS. 2 and 3, the high pressure pump of the present embodiment is made to be in close contact with a flat surface of a cylinder head 90 of an internal combustion engine using a mounting flange 1e provided on the pump body 1 and is fixed by a plurality of bolts not shown. An O-ring 61 is fitted into the pump body 1 for sealing between the cylinder head 90 and the pump body 1 to prevent engine oil from leaking to the outside.

A cylinder 6 is attached to the pump body 1 for guiding the reciprocating motion of the plunger 2. Furthermore, the electromagnetic suction valve 300 for supplying the fuel to the pressure chamber 11 via a pressure chamber inlet flow path 1a formed in the pump body 1, and a discharge valve mechanism 8 for discharging the fuel from the pressure chamber 11 to the discharge passage to prevent back flow are provided. The fuel that has passed through the discharge valve mechanism 8 is connected to an engine-side component by a discharge joint 12c.

The cylinder 6 is fixed to the pump body 1 by press fitting and caulking on the outer circumferential side thereof. Sealing is performed with the surface of a cylindrical press-fit portion such that the pressurized fuel does not leak from the gap with the pump body 1 to the low pressure side. The cylinder is brought into axial contact with a plane, and functions also as a double sealing in addition to the sealing of cylindrical press-fit portion of and the pump body 1 and the cylinder 6.

At the lower end of the plunger 2, there is provided a tappet 92 for converting rotational motion of a cam 93 attached to the camshaft of the internal combustion engine into vertical motion and transmitting the motion to the plunger 2. The plunger 2 is pressed against the tappet 92 by a spring 4 through a retainer 15. As a result, the plunger 2 can be reciprocated vertically with the rotational motion of the cam 93.

A plunger seal 13 held at the lower end portion of the inner circumference of a seal holder 7 is installed in a slidable contact with the outer circumference of the plunger 2 at the lower portion in the drawing of the cylinder 6. As a result, when the plunger 2 slides, the plunger seal 13 seals the fuel in an auxiliary chamber 7a and prevents the fuel from flowing into the internal combustion engine. At the same time, the plunger seal 13 prevents lubricating oil (including engine oil) lubricating a sliding portion in the internal combustion engine from flowing into the pump body 1.

As shown in FIG. 8, the suction joint 51 is attached to the pump body 1. The suction joint 51 is connected to a low pressure piping that supplies fuel from the fuel tank 20 of the vehicle, and the fuel is supplied from the connected position to the inside of the high pressure pump. The suction filter 52 pressed into the pump body 1 has a function of preventing foreign matter present between the fuel tank 20 and the low pressure fuel suction port 10a from being absorbed into the high pressure pump by the flow of fuel.

The fuel that has passed through the low pressure fuel suction port 10a reaches the suction port 31b of the electromagnetic suction valve 300 via the pressure pulsation reduction mechanism 9 and the low pressure fuel passage 10d.

The discharge valve mechanism 8 provided at the outlet of the pressure chamber 11 includes a discharge valve seat 8a, a discharge valve 8b contacting with and separating from the discharge valve seat 8a, a discharge valve spring 8c biasing the discharge valve 8b toward the discharge valve seat 8a, a discharge valve plug 8d, and a discharge valve stopper 8e for determining the stroke (moving distance) of the discharge valve 8b. The discharge valve plug 8d and the pump body 1 are joined by welding at a contact portion 8f to block the fuel from the outside.

When there is no fuel pressure difference between the pressure chamber 11 and the discharge valve chamber 12a, the discharge valve 8b is pressed against the discharge valve seat 8a by the biasing force of the discharge valve spring 8c, and is in a closed state. The discharge valve 8b opens against the discharge valve spring 8c only when the fuel pressure in the pressure chamber 11 becomes larger than the fuel pressure in the discharge valve chamber 12a. The high pressure fuel in the pressure chamber 11 is discharged to the common rail 23 via the discharge valve chamber 12a, the fuel discharge passage 12b, and the fuel discharge port 12. When the discharge valve 8b is opened, the discharge valve 8b contacts the discharge valve stopper 8e and the stroke is limited. Therefore, the stroke of the discharge valve 8b is appropriately determined by the discharge valve stopper 8e. As a result, the stroke is too large, and it is possible to prevent the fuel discharged at high pressure to the discharge valve chamber 12a from flowing back again into the pressure chamber 11 due to the delay of closing the discharge valve 8b, so that the efficiency decrease of the high pressure pump can be prevented. When the discharge valve 8b repeats valve opening and closing motions, the discharge valve 8b is guided in the outer circumferential surface of the discharge valve stopper 8e to move only in the stroke direction. As a result, the discharge valve mechanism 8 serves as a check valve that restricts the flow direction of the fuel.

As described above, the pressure chamber 11 includes the pump body 1, the electromagnetic suction valve 300, the plunger 2, the cylinder 6, and the discharge valve mechanism 8.

When the plunger 2 moves in the direction of the cam 93 and is in the suction stroke state by the rotation of the cam 93, the volume of the pressure chamber 11 increases and the fuel pressure in the pressure chamber 11 decreases. When the fuel pressure in the pressure chamber 11 becomes lower than the pressure in the suction passage 10d in this stroke, the valve body 30 is in the open state.

After the plunger 2 completes the suction stroke, the plunger 2 turns to vertical motion, and shifts to the compression stroke. Here, an electromagnetic coil 43 remains in the non-energized state, and a magnetic biasing force does not act. A rod biasing spring 40 is set to have a biasing force necessary and sufficient to open and maintain the valve body 30 in the non-energized state. Although a so-called normally open type high pressure pump is shown in the present embodiment, the present invention is not limited to this, and is applicable to a normally closed type high pressure pump. Although the volume of the pressure chamber 11 decreases with the compression motion of the plunger 2, in this state, the fuel once sucked into the pressure chamber 11 is returned again to the suction passage 10d through an opening of the valve body 30 in the open state, so that the pressure in the pressure chamber does not increase. This process is referred to as a return stroke.

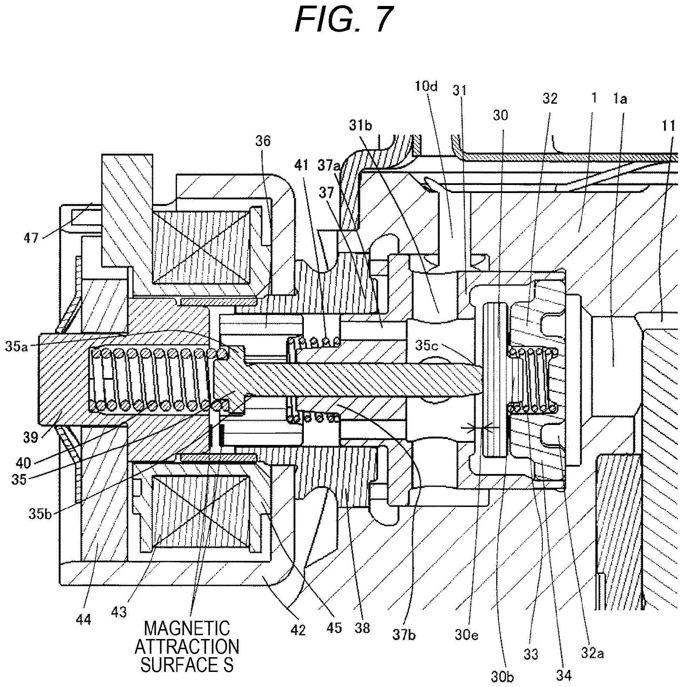

Now, the electromagnetic suction valve 300 will be described with reference to FIG. 7. The electromagnetic suction valve 300 refers to a mechanism that sucks the fuel by moving a magnetic core 39, a movable core 36, a rod 35, and the valve body 30 arranged following them by energizing the electromagnetic coil 43, and sends the fuel to the pressure chamber 11. These functions are described in detail below.

As described above, in the non-energized state, since the valve body 30 operates in the valve opening direction by the strong rod biasing spring 40, the type is the normal open type. However, when a control signal from an engine control unit 27 (hereinafter, referred to as an ECU) is applied to the electromagnetic suction valve 300, a current flows in the electromagnetic coil 43 via a terminal 46. The flow of current causes the magnetic core 39 to generate a magnetic attraction force.

Along with this, the movable core 36 is attracted in the valve closing direction by the magnetic attraction force of the magnetic core 39 on a magnetic attraction surface S described also in FIG. 7. In between the movable cores 36, a rod 35 provided with flanges 35a for locking the movable cores 36 is arranged. Note that the rod biasing spring 40 is covered by a lid holding member 39 and a lid member 44. Since the rod 35 has the flange portions 35a, the movable core 36 can be locked, so that the rod 35 can move together with the movable core 36. Therefore, the rod 35 arranged in between the movable cores 36 can move in the valve closing direction when the magnetic attraction force acts. Further, the rod 35 is arranged between rod guide portions 37b provided with a valve closing biasing spring 41 and a fuel passage 37 at the lower part of the movable core.

In the rod 35, a recessed portion 35b that is recessed toward the inner circumferential side is formed in a position in contact with the movable core 36 in the inner circumferential portion of the flange portion 35a. Since a relief portion at the time of contact of the movable core 36 can be formed by this, damage by collision of the rod 35 or the movable core 36 can be prevented. Further, at the tip end portion of the rod 35 on the side of the valve body 30, an inclined portion 35c whose diameter decreases as it heads to the tip end is formed. As a result, when the movable core 36 is inserted into the rod 35, the movable core 36 can be easily incorporated even in a case of slight misalignment, and the production efficiency can be increased. Note that, since the rod 35 is formed by lathe processing, a recessed portion that is recessed on the opposite side to the valve body 30 is formed at the tip end portion of the valve body 30 side.

The valve body 30, a suction valve biasing spring 33, and a stopper 32 are provided on the lower portion (the suction valve side) of the rod 35. The valve body 30 projects toward the pressure chamber, and a guide portion 30b that is guided by the suction valve biasing spring 33 is formed. The valve body 30 is moved by the gap of a valve body stroke 30e along with the movement of the rod 35, so that the fuel supplied from the supply passage 10d in the open state is supplied to the pressure chamber. The guide portion 30b is pressed into the housing of the suction valve mechanism, and stops moving by colliding with the fixed stopper 32. The rod 35 and the valve body 30 have separate and independent structures.

The valve body 30 is configured to come into contact with the valve seat of a valve seat member 31 arranged on the suction side to close the flow path to the pressure chamber 11, and separate from the valve seat to open the flow path to the pressure chamber 11. Here, the high pressure pump in recent years is required to further increase the pressure, for example, since the discharge fuel becomes 30 MPa or more. Accordingly, the pressure of the pressure chamber 11 becomes high so that the impact at the time of colliding of the valve body 30 with the valve seat member 31 or the impact at the time of colliding of the valve body 30 with the stopper 32 is very large, and it is necessary to increase the strength of the valve body 30.

In the present embodiment, the valve body 30 is arranged in a flat plate shape, and includes a flat plate portion and the guide portion 30b projecting to the pressure chamber side as described above. Here, as a factor affecting the strength, in the present embodiment, attention is paid to the thickness of the flat plate portion. That is, as shown in FIG. 7, the strength is improved by thickening the thickness of the flat plate portion of the valve body 30 in the moving direction of the suction valve biasing spring 33. Specifically, the thickness of the flat plate portion is formed to be thicker than the thickness of the guide portion 30b projecting from the flat plate portion. FIG. 7 shows a cross-sectional view of the position where the suction port 31b (flow path) formed in the valve seat member 31 is the largest. At this time, it is preferable that the thickness of the flat plate portion of the valve body 30 be thicker than the thickness in the moving direction of the valve seat portion that contacts with the flat plate portion of the valve seat member 31 at the downstream side with respect to the suction port 31b. With such a configuration, the valve body 30 has strength.

In summary, the magnetic biasing force overcomes the biasing force of the rod biasing spring 40, and the rod 35 moves away from the suction valve 30. Therefore, the suction valve 30 is closed by the biasing force of the suction valve biasing spring 33 and the fluid force caused by the fuel flowing into the suction passage 10d. After the valve is closed, the fuel pressure of the pressure chamber 11 rises together with the ascending motion of the plunger 2, and when the pressure becomes equal to or higher than the pressure of the fuel discharge port 12, the high pressure fuel is discharged via the discharge valve mechanism 8, and the high pressure fuel is supplied to the common rail 23. This stroke is referred to as a discharge stroke.

That is, the compression stroke (the ascending stroke from the lower start point to the upper start point) of the plunger 2 consists of the return stroke and the discharge stroke. By controlling the energization timing of the coil 43 of the electromagnetic suction valve 300, the amount of high pressure fuel to be discharged can be controlled. If the electromagnetic coil 43 is energized earlier, the ratio of the return stroke during the compression stroke is smaller and the ratio of the discharge stroke is greater. That is, the amount of fuel returned to the suction passage 10d is smaller, and the amount of fuel discharged at a high pressure is larger. On the other hand, if the energization timing is delayed, the ratio of the return stroke during the compression stroke is larger and the ratio of the discharge stroke is smaller. That is, the amount of fuel returned to the suction passage 10d is larger, and the amount of fuel discharged at a high pressure is smaller. The energization timing to the electromagnetic coil 43 is controlled by a command from the ECU 27.

By controlling the energization timing to the electromagnetic coil 43 as described above, it is possible to control the amount of fuel to be discharged at a high pressure to an amount required by the internal combustion engine. The relief valve mechanism 200 includes a relief valve cover 201, a ball valve 202, a relief valve presser 203, a spring 204, and a spring holder 205. The relief valve mechanism 200 is a valve configured to operate only when the common rail 23 or the member beyond the common rail 23 has some problem and abnormally high pressure occurs, and the relief valve mechanism 200 has a role of opening only when the pressure of the common rail 23 or the member beyond the common rail 23 becomes high and returning the fuel to the pressure chamber. Therefore, the relief valve mechanism 200 has a very strong spring 204.

A low pressure fuel chamber 10 is provided with the pressure pulsation reduction mechanism 9 for reducing the pressure pulsation generated in the high pressure pump from spreading to a fuel piping 28. Further, the damper upper portion 10b and the damper lower portion 10c are provided at intervals above and below the pressure pulsation reduction mechanism 9, respectively. When the fuel that has flown into the pressure chamber 11 once is returned again to the suction passage 10d through the suction valve body 30 that is in the open state for capacity control, the fuel returned to the suction passage 10d causes the pressure pulsation in the low pressure fuel chamber 10. However, the pressure pulsation reduction mechanism 9 provided in the low pressure fuel chamber 10 is formed of a metal diaphragm damper in which two disk-shaped metal plates of a corrugated form are laminated on the outer circumference thereof and an inert gas such as argon is injected into the inside, and the pressure pulsation is absorbed and reduced by this metal damper expanding or contracting. The reference numeral 9a denotes a mounting bracket for fixing the metal damper to the inner circumferential portion of the pump body 1, and is installed on the fuel passage, so that the supporting portion with the damper is not in a full circumference but in a part of the mounting bracket 9a, and the fluid is allowed to freely move back and front of the mounting bracket 9a.

The plunger 2 has a large-diameter portion 2a and a small-diameter portion 2b, and the volume of the auxiliary chamber 7a is increased or decreased by the reciprocating motion of the plunger. The auxiliary chamber 7a communicates with the low pressure fuel chamber 10 through the fuel passage 10e. When the plunger 2 descends, a flow of fuel flows from the auxiliary chamber 7a to the low pressure fuel chamber 10, and when the plunger 2 ascends, a flow of fuel flows from the low pressure fuel chamber 10 to the auxiliary chamber 7a.

As a result, the flow rate of fuel into and out of the pump in the suction stroke or return stroke of the pump can be reduced, and the pressure pulsation generated inside the high pressure pump can be reduced.

The contents of the present embodiment will be described in detail below.

In the high pressure pump, it is desirable that the suction joint 51, the discharge joint 12c, the discharge valve mechanism 8 or the electromagnetic suction valve mechanism 300, which are functional components, be freely installed in the radial direction with respect to the high pressure pump. This is to increase the freedom of layout in the engine.

The high pressure pump and functional components are joined by welding. Here, if the functional components described above projecting outward from the outer surface of the pump body 1 are joined, for example by laser welding, a beam for the laser welding needs to be arranged without interfering with each other's functional components or the flange 1e.

For example, when the discharge joint 12c is welded, irradiation is performed with the laser beam 500 as shown in FIG. 1, and the beam needs to be arranged without interfering with the flange 1e and other functional components. At this time, if irradiation is performed with the laser beam 500 such that the laser beam 500 is closer to parallel to the axial direction of the functional components, interference can be prevented, and the freedom of arrangement of the functional components can be further enhanced.

At the same time, the reliability of the connection portion between each functional component and the body 1 needs to be sufficiently secured to prevent the fuel inside the pump from leaking to the outside. That is, sufficient strength of the connection portion needs to be secured.

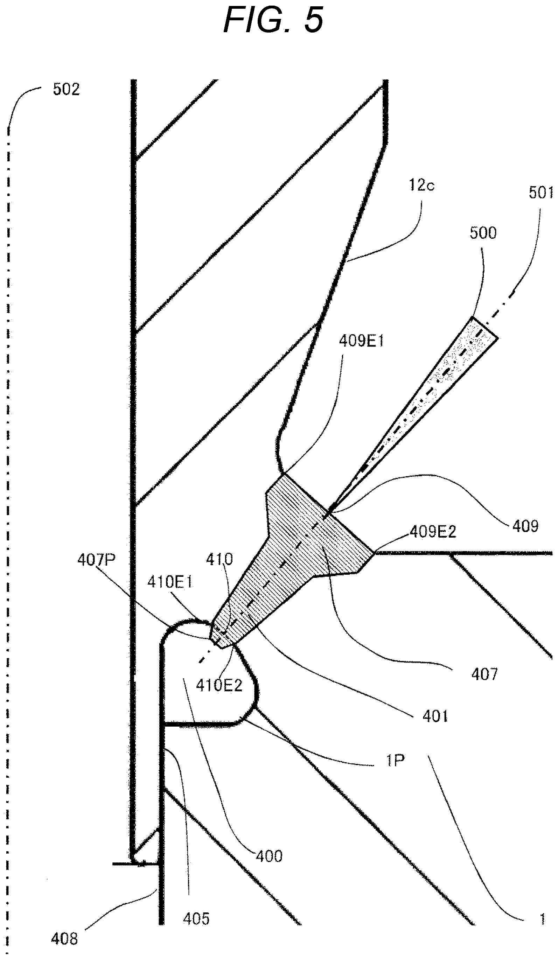

As described above, in the present embodiment, in order to increase the degree of freedom in the arrangement of each functional component, the reliability of the connection portion of each functional component is secured. Therefore, as shown in FIG. 5, the high pressure pump of the present embodiment includes: the pump body 1; the discharge joint 12c that is a functional component attached to the pump body 1; a welded portion 407 that fixes the discharge joint 12c to the pump body 1; and an air gap 400 formed by the welded portion 407, the pump body 1 and the discharge joint 12c at the tip of the welding direction (the direction of the laser beam 500) of the welded portion 407. A straight line 501 connecting a middle 409 of an entrance surface in the welding direction of the welded portion 407 and a middle 410 of an exit surface forming an air gap 400 is formed so as to head toward the radially inside from the radially outside of the discharge joint 12c as heading in an attachment direction in an axial direction 502 (also referred to as a central axis direction) of the discharge joint 12c. In short, the straight line 501 of the welded portion 407 is formed obliquely. Note that, in FIG. 5, the discharge joint 12c is defined by the direction from the upper side to the lower side.

As the definition of the middle 409 of the entrance surface of the welded portion 407, in the cross-sectional view in the welding direction as shown in FIG. 5, it is defined as the middle (midmost) of the straight line connecting from one end 409E1 that is the most radially outside facing the outer space to another end 409E2 that is the most radially outside. Alternatively, it may be defined as the middle (midmost) of the length of the curve formed by the welded portion 407 connecting from the one end 409E1 that is the most radially outside facing the outer space to another end 409E2 that is the most radially outside. Similarly, in the cross-sectional view in the welding direction as shown in FIG. 5, the middle 410 of the exit surface of the welded portion 407 is defined as the middle (midmost) of the straight line connecting from one end 410E1 that is the most radially outside facing the air gap 400 to another end 410E2 that is the most radially outside. Alternatively, it may be defined as the middle (midmost) of the length of the curve formed by the welded portion 407 connecting from the one end 410E1 that is the most radially outside facing the air gap 400 to another end 410E2 that is the most radially outside.

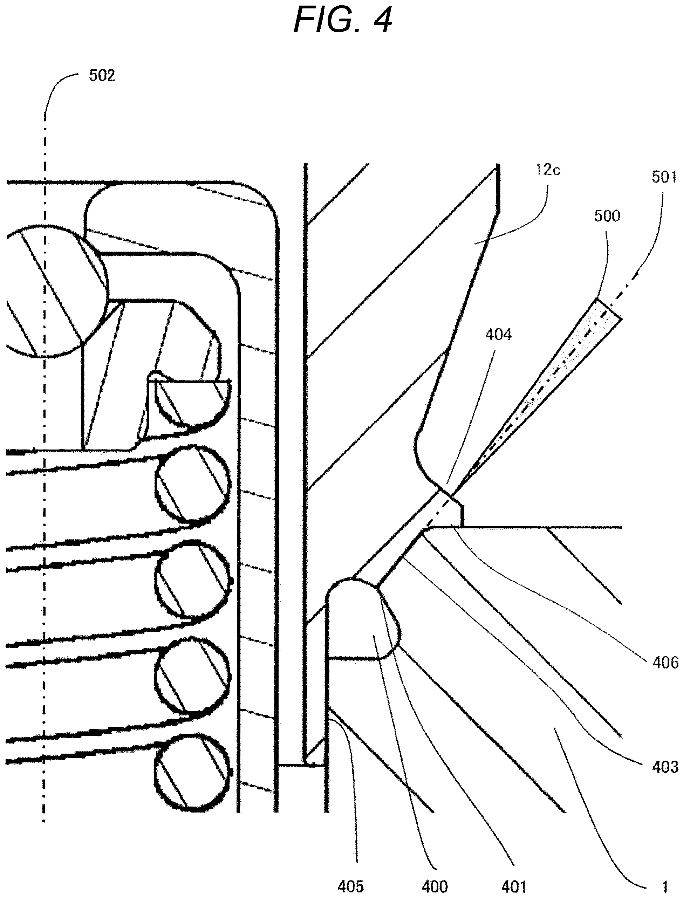

At this time, the functional component inserted in the hole formed in the pump body 1, for example, the outer circumferential portion of the discharge joint 12c shown in FIG. 4 is press fit to an inner circumferential portion of the hole formed in the pump body 1 by a press fit portion 405. At this time, a press-fit receiving surface 406 of the pump body 1 further restricts the movement in the attachment direction (the direction from the upper side to the lower side in FIG. 4) in the axial direction of the discharge joint 12c (the direction shown in 502). In this state, a boundary surface 403 between the discharge joint 12c and the pump body 1 configured to be inclined obliquely with respect to the axial direction (the direction shown by 502) of the discharge joint 12c is joined by the laser beam 500, and the air gap 400 is formed on the side opposite to the outer circumferential surface with respect to a laser irradiation surface 404. The air gap may be referred to as a space 400. The pump body 1 and the functional component do not necessarily have to be press-fitted before welding, and an insertion structure having a gap may be adopted. The welded portion 407 welds the outer circumference of the discharge joint 12c in a full circumference and seals the fuel inside.

Here, when the air gap 400 is not provided, stress is concentrated on the joint portion 407 at the time of welding, and a notched shape having an acute angle or a small corner radius may be formed. However, in the case of providing the air gap 400, since there is a sufficient space volume, a notched shape having an acute angle or a small corner radius with which stress is concentrated in the vicinity of the welded portion 407, in particular at an end portion 401 of the welded portion 407 is not generated. Therefore, even when a load is applied to the welded portion 407, the welded portion 407 can be shaped so as not to cause stress concentration.

According to the above configuration, it is possible to provide a high pressure pump in which the stress concentration in the welded portion 407 of the welded component (functional component) is prevented and the reliability is improved. As described in claim 1, the air gap 400 is characterized by being formed by the pump body 1 and the functional component. At this time, it is desirable that the shape of the recess be not a square but a shape close to a circle. This is because when the shape is close to a square, stress is likely to be concentrated at the corner. By providing the space 400, it is possible to prevent the spatter (minute metal powder) generated at the time of welding from entering the inside of the pump.

FIG. 4 shows the component structure before welding. The functional component (discharge joint 12c) is provided with a flat portion 404 that is perpendicular to the abutting portion (boundary surface 403). The flat portion 404 is irradiated with the laser 500 vertically. That is, the straight line forming the abutting portion (boundary surface 403) and the angle of the irradiation direction 501 of the laser 500 are the same, and the flat portion 404 of the functional component is formed perpendicular to these. By making the irradiation direction 501 of the laser 500 and the irradiation surface (flat portion 404) perpendicular, the absorption efficiency of the laser becomes the highest, and stable welding becomes possible. It is also possible to provide a vertical surface perpendicular to the irradiation direction 501 of the laser 500 on the side of the pump body 1 instead of the side of the functional component (discharge joint 12c). Here, the functional component is a component for satisfying the performance of the high pressure pump, and is, for example, a discharge valve plug 8d for sealing a space in which the discharge valve mechanism 8 is arranged, in addition to the discharge joint 12c described above. When the space where the relief valve mechanism 200 is arranged is sealed with a relief valve plug, which is different from the structure shown in FIG. 2, this may be used as a functional component. Other than that, it is applicable also to the suction joint 51, and even though it is a component welded to a pump body, a component other than the above-mentioned may be referred to as a functional component, and the present embodiment is applicable.

The component structure after welding is shown in FIG. 5. As shown in FIG. 5, in the present embodiment, a welded portion 407 having a substantially symmetrical cross-sectional shape is formed with respect to a straight line 501 connecting the middle 409 of the entrance surface and the middle 410 of the exit surface of the welded portion 407.

The laser irradiation surface 404 is provided vertically at the incident angle of the laser beam 500 with respect to the rotation axis 502 at the time of welding, and the boundary surface 403 is made parallel, so that the absorptivity of the laser and the robustness of the welding position deviation can be improved. That is, the welded portion 407 has a substantially symmetrical shape, and a stable welding shape can be obtained even if the irradiation position of the laser 500 is slightly deviated with respect to the abutting portion (boundary surface 403), and the reliability of strength can be secured.

As shown in FIG. 5, it is desirable that all of the portion of the pump body 1 forming the air gap 400 and the portion 407P of the welded portion 407 be located at the outer circumferential side (radially outside) with respect to the pump body inner circumferential surface 408 that is the start point of the air gap 400. Thereby, the pump body shape can be simplified, the processing time at the time of machining can be shortened, and the life of the cutting tool can be improved.

It is desirable that the intersection angle between the axis line 502 of the functional component (discharge joint 12c) and the straight line 501 connecting the middle 409 of the entrance surface and the middle 410 of the exit surface of the welded portion 407 be within a range between 10 degrees to 50 degrees. Here, the functional component is described by taking the discharge joint 12c as an example, but the same can be applied similarly to the other functional components described above. The axis line 502 is a line passing through the center in a cross section when the discharge joint 12c is viewed in the axial direction, and may be referred to as a central axis line 502.

Referring to FIG. 4, in the present embodiment, laser irradiation is set such that an angle of the laser irradiation 500 between the surface 404 and the boundary surface 403 is an arbitrary angle between 10 degrees and 50 degrees. Thereby, interference between the flange 1e of the pump body 1 and the laser 500 can be avoided, and the degree of freedom of the product layout is improved.

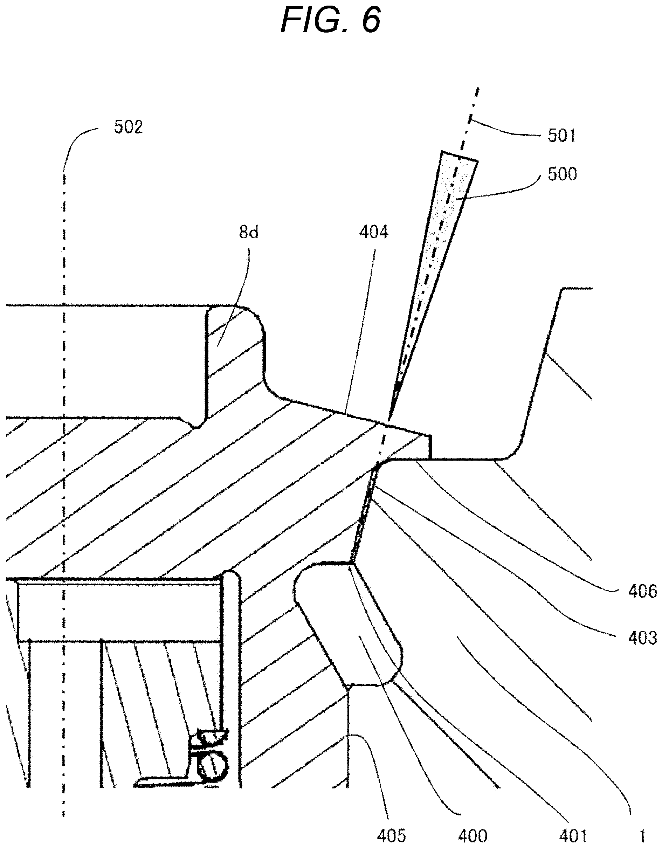

Note that FIG. 6 shows a welding structure of the discharge plug 8d of the high pressure pump, and is a view corresponding to FIG. 4 for explaining a state before welding. However, although the functional components themselves are different, basically the contents are the same as those in FIG. 4, the same reference numerals have the same meaning, and thus detailed description will be omitted. Moreover, although the state after welding of discharge plug 8d as FIG. 6 is not shown in the drawing, since it is a shape similar to FIG. 4 basically, detailed description will be omitted.

Note that, as described above, in addition to the discharge joint 12c, the present embodiment can be similarly applied also to a component for satisfying the performance of the high pressure pump, for example, the discharge valve plug 8d for sealing a space (discharge valve chamber 12a) in which the discharge valve mechanism 8 is arranged. When the space in which the relief valve mechanism 200 is arranged is sealed with a relief valve plug, the present embodiment can be applied to the relief valve plug. Alternatively, the suction joint 51 can be applied as a functional component, and, in addition to this, can be applied in the functional components other than the above.

As shown in FIG. 5, it is desirable that the high pressure pump of the present embodiment be configured such that the intersection angle between the central axis line of the discharge valve plug and the straight line connecting the center of the entrance surface of the welded portion of the discharge valve plug 8d and the center of the exit surface is small with respect to the intersection angle between the axis line 502 (also referred to as a central axis line) of the discharge joint 12c and the straight line 501 connecting the middle 409 of the entrance surface and the middle 410 of the exit surface of the welded portion 407. That is, the discharge valve plug 8d is a functional component arranged such that all of the welded portions are located inside with respect to the hole entrance surface of the pump body 1 as shown in FIG. 3. Further, since a wall surface portion 16 is formed along the horizontal direction (that is, the axial direction of the discharge valve plug 8d) immediately radially outside the welded portion of the discharge valve plug 8d, there is no space. Therefore, when the laser irradiation is inclined, there is a possibility of interference with the wall surface portion 16. For the functional component arranged in this way, it is desirable that the intersection angle between the axis line (center axis line) of the functional component (discharge valve plug 8d) and the straight line connecting the middle of the entrance surface and the middle of the exit surface of the welded portion be within a range between 10 degrees to 30 degrees.

On the other hand, since the wall surface portion is not formed along the horizontal direction (that is, the axial direction of the discharge joint 12c) immediately radially outside the welded portion 407 of the discharge joint 12c, there is room for a space. The wall surface portion 17 shown in FIG. 1 does not interfere even if the laser is inclined to some extent. Thus, if there is no wall surface portion that interferes even if the laser irradiation is inclined by a degree between 30 degrees and 50 degrees as described above, it is desirable that the intersection angle between the axis line 502 (center axis line) of the functional component (discharge joint 12c) and the straight line 501 connecting the middle 409 of the entrance surface and the middle 410 of the exit surface of the welded portion 407 be in a range between 30 degrees to 50 degrees.

The description of the embodiment is completed now, but the present invention can be widely modified and implemented without being limited to the embodiment described above. For example, although, in the embodiment described above, the present invention is applied to the high pressure pump, the arrangement position and the arrangement method of the functional component in the high pressure pump that may be applied to a metal component that requires welding are not limited to the illustration of the embodiment described above.

### Reference Signs List

- 1: pump body
- 2: plunger
- 6: cylinder
- 7: seal holder
- 8: discharge valve mechanism
- 9: pressure pulsation reduction mechanism
- 10a: low pressure fuel suction port
- 11: pressure chamber
- 12: fuel discharge port
- 13: plunger seal
- 30: suction valve
- 36: movable core
- 40: rod biasing spring
- 43: electromagnetic coil
- 200: relief valve mechanism
- 300: electromagnetic suction valve
- 400: air gap (space) of welded portion
- 407: welded portion
- 500: laser beam

## Claims

1. A high pressure fuel supply pump comprising:
a pump body (1);
a functional component (8d, 12c) attached to the pump body (1);
a welded portion (407) that fixes the functional component (8d, 12c) to the pump body (1); and
an air gap (400) formed by the welded portion (407), the pump body (1), and the functional component (8d, 12c),
wherein a straight line (501) connecting a middle (409) of an entrance surface in the welding direction of the welded portion (407) and a middle (410) of an exit surface is formed so as to head from a radially outside to a radially inside of the functional component (8d, 12c) as heading toward an attachment direction in an axis direction (502) of the functional component (8d, 12c),
**characterised in that**
the air gap (400) is formed by the exit surface and at a tip of the welding direction of the welded portion (407), and
the welded portion (407) is formed to be substantially symmetrical with respect to the straight line (501) connecting the middle (409) of the entrance surface and the middle (410) of the exit surface.

2. The high pressure fuel supply pump according to claim 1,
wherein all of a portion of the pump body (1) forming the air gap (400) and a portion of the welded portion (407) are located on an outer circumferential side with respect to an inner circumferential surface of the pump body (1) that is a start point of the air gap (400).

3. The high pressure fuel supply pump according to claim 1,
wherein an intersection angle between an axis line (502) of the functional component (8d, 12c) and the straight line (501) connecting the middle (409) of the entrance surface and the middle (410) of the exit surface is in a range between 10 degrees to 50 degrees.

4. The high pressure fuel supply pump according to claim 1,
wherein the functional component (8d, 12c) is a discharge joint (12c).

5. The high pressure fuel supply pump according to claim 1,
wherein the functional component (8d, 12c) is a discharge valve plug (8d) that seals a space in which a discharge valve mechanism (8) is arranged, or a relief valve plug that seals a space in which a relief valve mechanism (200) is arranged.

6. The high pressure fuel supply pump according to claim 1,
wherein the functional component (8d, 12c) is a suction joint (51) that sucks fuel into the pump body (1).

7. The high pressure fuel supply pump according to claim 4,
wherein an intersection angle between an axis line (502) of a discharge valve plug (8d) and a straight line (501) connecting a middle (409) of an entrance surface and a middle (410) of an exit surface of a welded portion (407) of the discharge valve plug (8d) is small with respect to an intersection angle between an axis line (502) of the discharge joint (12c) and a straight line (501) connecting the middle (409) of the entrance surface and the middle (410) of the exit surface of the welded portion (407).

8. The high pressure fuel supply pump according to claim 4,
wherein an intersection angle between an axis line (502) of the discharge joint (12c) and the straight line (501) connecting the middle (409) of the entrance surface and the middle (410) of the exit surface of the welded portion (407) of the discharge joint (12c) is in a range between 30 degrees to 50 degrees.

9. The high pressure fuel supply pump according to claim 5,
wherein an intersection angle between an axis line (502) of the discharge valve plug (8d) and a straight line (501) connecting a middle (409) of an entrance surface and a middle (410) of an exit surface of a welded portion (407) of the discharge valve plug (8d) is in a range between 10 degrees to 30 degrees.

## Patentansprüche

1. Hochdruck-Kraftstoffpumpe umfassend:
einen Pumpenkörper (1);
eine am Pumpenkörper (1) angebrachte Funktionskomponente (8d, 12c);
einen geschweißten Abschnitt (407), der die Funktionskomponente (8d, 12c) am Pumpenkörper (1) befestigt; und
einen Luftspalt (400), der vom geschweißten Abschnitt (407), dem Pumpenkörper (1) und der Funktionskomponente (8d, 12c) gebildet ist,
wobei eine gerade Linie (501), die eine Mitte (409) einer Eintrittsfläche in Schweißrichtung des geschweißten Abschnitts (407) und eine Mitte (410) einer Austrittsfläche verbindet, so ausgebildet ist, dass sie von radial außen nach radial innen der Funktionskomponente (8d, 12c) vorstößt, während sie der Anbringungsrichtung folgend in Achsenrichtung (502) der Funktionskomponente (8d, 12c) vorstößt,
**dadurch gekennzeichnet, dass**
der Luftspalt (400) an einer Spitze der Schweißrichtung des geschweißten Abschnitts (407) und von der Austrittsfläche gebildet ist, und
der geschweißte Abschnitt (407) so ausgebildet ist, dass er bezüglich der geraden Linie (501), die die Mitte (409) der Eintrittsfläche und die Mitte (410) der Austrittsfläche verbindet, im Wesentlichen symmetrisch ist.

2. Hochdruck-Kraftstoffpumpe nach Anspruch 1,
wobei ein Abschnitt des Pumpenkörpers (1), der den Luftspalt (400) bildet, und ein Abschnitt des geschweißten Abschnitts (407) bezüglich einer Innenumfangsfläche des Pumpenkörpers (1), der den Anfangspunkt des Luftspalts (400) darstellt, insgesamt auf einer Außenumfangsseite angeordnet sind.

3. Hochdruck-Kraftstoffpumpe nach Anspruch 1,
wobei ein Schnittwinkel zwischen einer Achsenlinie (502) der Funktionskomponente (8d, 12c) und der die Mitte (409) der Eingangsfläche und die Mitte 410 der Austrittsfläche verbindenden geraden Linie (501) im Bereich zwischen 10 Grad bis 50 Grad liegt.

4. Hochdruck-Kraftstoffpumpe nach Anspruch 1,
wobei die Funktionskomponente (8d, 12c) ein Aulassanschluss (12c) ist.

5. Hochdruck-Kraftstoffpumpe nach Anspruch 1,
wobei die Funktionskomponente (8d, 12c) ein Aulassventilstopfen (8d), der einen Raum abdichtet, in dem ein Aulassventilmechanismus (8) angeordnet ist, oder ein Entlastungsventilstopfen ist, der einen Raum abdichtet, in dem ein Entlastungsventilmechanismus (200) angeordnet ist.

6. Hochdruck-Kraftstoffpumpe nach Anspruch 1,
wobei die Funktionskomponente (8d, 12c) ein Sauganschluss (51) ist, der Kraftstoff in den Pumpenkörper (1) saugt.

7. Hochdruck-Kraftstoffpumpe nach Anspruch 4,
wobei ein Schnittwinkel zwischen einer Achsenlinie (502) eines Aulassventilstopfens (8d) und einer eine Mitte (409) einer Eintrittsfläche und eine Mitte (410) einer Austrittsfläche des geschweißten Abschnitts (407) des Aulassventilstopfens (8d) verbindenden geraden Linie (501) bezüglich des Schnittwinkels zwischen einer Achsenlinie (502) des Aulassanschlusses (12c) und einer die Mitte (409) der Eintrittsfläche und die Mitte (410) der Austrittsfläche des geschweißten Abschnitts (407) verbindenden geraden Linie (501) klein ist.

8. Hochdruck-Kraftstoffpumpe nach Anspruch 4,
wobei ein Schnittwinkel zwischen einer Achsenlinie (502) des Aulassanschlusses (12c) und der die Mitte (409) der Eintrittsfläche und die Mitte (410) der Austrittsfläche des geschweißten Abschnitts (407) des Aulassanschlusses (12c) verbindenden geraden Linie (501) im Bereich zwischen 30 Grad bis 50 Grad liegt.

9. Hochdruck-Kraftstoffpumpe nach Anspruch 5,
wobei ein Schnittwinkel zwischen einer Achsenlinie (502) des Aulassventilstopfens (8d) und einer eine Mitte (409) einer Eintrittsfläche und eine Mitte (410) einer Austrittsfläche eines geschweißten Abschnitts (407) des Aulassventilstopfens (8d) verbindenden geraden Linie (501) im Bereich zwischen 10 Grad bis 30 Grad liegt.

## Revendications

1. Pompe d'alimentation en carburant haute pression comprenant :
un corps (1) de pompe ;
un composant fonctionnel (8d, 12c) fixé au corps (1) de pompe ;
une partie soudée (407) qui fixe le composant fonctionnel (8d, 12c) au corps (1) de pompe ; et
un espace d'air (400) formé par la partie soudée (407), le corps (1) de pompe, et le composant fonctionnel (8d, 12c),
dans laquelle une ligne droite (501) connectant un milieu (409) d'une surface d'entrée dans le sens de soudage de la partie soudée (407) et un milieu (410) d'une surface de sortie est formée de manière à s'orienter de radialement extérieurement à radialement intérieurement au composant fonctionnel (8d, 12c) comme s'orientant vers un sens de fixation dans un sens axial (502) du composant fonctionnel (8d, 12c),
**caractérisée en ce que**
l'espace d'air (400) est formé par la surface de sortie et à une extrémité du sens de soudage de la partie soudée (407), et
la partie soudée (407) est formée de manière à être sensiblement symétrique par rapport à la ligne droite (501) connectant le milieu (409) de la surface d'entrée et le milieu (410) de la surface de sortie.

2. Pompe d'alimentation en carburant haute pression selon la revendication 1,
dans laquelle toutes parmi une partie du corps (1) de pompe formant l'espace d'air (400) et une partie de la partie soudée (407) sont situées sur un côté circonférentiel extérieur par rapport à une surface circonférentielle intérieure du corps (1) de pompe qui est un point de départ de l'espace d'air (400).

3. Pompe d'alimentation en carburant haute pression selon la revendication 1,
dans laquelle un angle d'intersection entre une ligne axiale (502) du composant fonctionnel (8d, 12c) et la ligne droite (501) connectant le milieu (409) de la surface d'entrée et le milieu (410) de la surface de sortie est dans une plage entre 10 degrés à 50 degrés.

4. Pompe d'alimentation en carburant haute pression selon la revendication 1,
dans laquelle le composant fonctionnel (8d, 12c) est un raccord de décharge (12c).

5. Pompe d'alimentation en carburant haute pression selon la revendication 1,
dans laquelle le composant fonctionnel (8d, 12c) est un clapet de vanne de décharge (8d) qui ferme de façon étanche un espace dans lequel un mécanisme de vanne de décharge (8) est agencé, ou un clapet de vanne de détente qui ferme de façon étanche un espace dans lequel un mécanisme de vanne de détente (200) est agencé.

6. Pompe d'alimentation en carburant haute pression selon la revendication 1,
dans laquelle le composant fonctionnel (8d, 12c) est un raccord d'aspiration (51) qui aspire du carburant dans le corps (1) de pompe.

7. Pompe d'alimentation en carburant haute pression selon la revendication 4,
dans laquelle un angle d'intersection entre une ligne axiale (502) du clapet de vanne de décharge (8d) et une ligne droite (501) connectant un milieu (409) d'une surface d'entrée et un milieu (410) d'une surface de sortie d'une partie soudée (407) du clapet de vanne de décharge (8d) est petit par rapport à un angle d'intersection entre une ligne axiale (502) du raccord de décharge (12c) et une ligne droite (501) connectant le milieu (409) de la surface d'entrée et le milieu (410) de la surface de sortie de la partie soudée (407).

8. Pompe d'alimentation en carburant haute pression selon la revendication 4,
dans laquelle un angle d'intersection entre une ligne axiale (502) du raccord de décharge (12c) et la ligne droite (501) connectant le milieu (409) de la surface d'entrée et le milieu (410) de la surface de sortie de la partie soudée (407) du raccord de décharge (12c) est dans une plage entre 30 degrés à 50 degrés.

9. Pompe d'alimentation en carburant haute pression selon la revendication 5,
dans laquelle un angle d'intersection entre une ligne axiale (502) du clapet de vanne de décharge (8d) et une ligne droite (501) connectant un milieu (409) d'une surface d'entrée et un milieu (410) d'une surface de sortie d'une partie soudée (407) du clapet de vanne de décharge (8d) est dans une plage entre 10 degrés à 30 degrés.
